# FASCICULE DE BREVET EUROPEEN

(11) **EP 1 981 673 B1**
(45) Date de publication et mention de la délivrance du brevet: **19.08.2009**
(21) Numéro de dépôt: 07712075.6
(22) Date de dépôt: 22.01.2007
(51) Int. Cl.: B23D 36/00, G06Q 10/00

(54) **PROCÉDÉ DE DÉCOUPE D'UNE PANOPLIE DE PIÈCES**
VERFAHREN ZUM AUSSCHNEIDEN EINES TEILESATZES
METHOD FOR CUTTING OUT A PANOPLY OF PARTS

(30) Priorité: 27.01.2006 FR 0650288
(43) Date de publication de la demande: 22.10.2008
(73) Titulaire: AIRBUS France, 31060 Toulouse Cédex (FR)
(72) Inventeur: TREMOUREUX, Laurent, F-44600 Saint-Nazaire (FR); HAMANN, Jean-Christophe, F-44500 La Baule (FR)
(74) Mandataire: Schmit, Christian Norbert Marie
(86) Numéro de dépôt international: PCT/EP2007/050619
(87) Numéro de publication internationale: WO 2007/085584

(56) Documents cités:
- WO-A-01/04805
- US-A1- 2002 092 389

## Description

La présente invention concerne un procédé de découpe d'une panoplie de pièces. Ce procédé permet de déterminer de manière automatique et optimale un ordre de découpe des pièces.

Les applications de la présente invention concernent le domaine d'usinage de pièces industrielles, en particulier le domaine de l'industrie aéronautique, où les pièces à réaliser sont de forme et de taille différentes, et, les panoplies sont créées au fur à mesure du besoin dans une organisation de production en flux tendu.

Actuellement, pour réaliser des pièces de forme régulière ou irrégulière, par pliage, estampage ou emboutissage profond, on procède à une découpe des flans correspondant à ces pièces dans des plaques qui sont généralement en alliage métalliques, matériau plastique ou composite. Plusieurs flans ayant des formes très différentes peuvent être découpés dans une même plaque ou un empilement de plaques. Dans la suite de la description, on désigne par "pièces" les flans destinés à la réalisation des pièces.

Un processus d'imbrication est utilisé pour placer les pièces les unes par rapport aux autres à partir des données géométriques des pièces et éventuellement du parcours de l'outil de découpe correspondant afin d'optimiser le rapport entre la surface des pièces et la surface de plaque de manière à réduire les chutes. L'ensemble des pièces positionnées sur la plaque constitue une panoplie.

A l'issue de ce processus de l'imbrication, chaque pièce est repérée par un cadre qui l'entoure, et notamment par la position du centre de son cadre et son orientation dans le repère de la panoplie et chaque pièce est associée à un parcours d'usinage.

Avant chaque opération de découpe, on doit déterminer sur la panoplie l'ordre de découpe des pièces en les numérotant, ensuite cet ordre est enregistré dans un programme destiné au système de commande de l'appareil de découpe. L'outil de découpe guidé par ce système de commande découpe les pièces selon cet ordre.

Actuellement cette étape de détermination de l'ordre de découpe est effectuée manuellement par un préparateur expérimenté.

La détermination de l'ordre de la découpe est une étape très importante dans le procédé car elle conditionne les trajectoires de l'outil pendant la découpe. Cet ordre a une influence non négligeable sur la précision de la découpe, donc la qualité de la pièce et sur le rendement de l'opération de découpe. En effet, au fur à mesure de la progression de la découpe dans la panoplie, les pièces préalablement découpées ne sont plus attachées à la panoplie et laissent des zones sans matière dans la panoplie (squelette). Les pièces devant être découpées se trouvant à côté de ces zones vides sont exposées à une situation plus instable, car ces pièces sont moins soutenues par la matière. Cette instabilité pendant la découpe entraîne une découpe moins précise et donne lieu à des pièces de mauvaise qualité. Cet ordre est particulièrement critique lorsque la panoplie est peu maintenue sur la table de l'appareil de découpe, et il est d'autant plus critique dans le cas d'un empilement de plaques. Or le procédé de découpe à maintien minimum d'un empilement de plaques est le procédé qui offre le maximum de flexibilité et donc particulièrement adapté à une production du type flux tendus. Un choix judicieux de l'ordre de découpe de la part du préparateur est donc fondamental pour réussir la réalisation des pièces.

Par ailleurs si cet ordre n'est pas correctement déterminé, des déplacements inutiles et parfois dangereux peuvent détériorer la qualité des pièces déjà découpées.

Un autre inconvénient technique soulevé par le fait d'une détermination manuelle est le temps nécessaire au préparateur de déterminer l'ordre. En effet dans le domaine aéronautique, la production des pièces est une production en flux tendus, les panoplies sont crées au fur à mesure du besoin et aucune panoplie n'est identique à une précédente, le préparateur doit optimiser cet ordre chaque fois que la configuration de la panoplie change.

Pour résoudre ces problèmes, la présente invention propose un procédé de découpe, simple dans son mode opératoire et d'une grande fiabilité, comportant une étape de détermination automatique de l'ordre de découpe des pièces à partir d'une topographie simplifiée de la panoplie, cette étape de détermination étant ensuite intégrée directement dans un programme de découpe de l'appareil de découpe.

Un premier objectif de la présente invention est de réaliser des pièces de qualité supérieure tout en améliorant l'efficacité du processus de découpe.

Un deuxième objectif est de s'affranchir des risques d'erreurs inhérents de l'opérateur en proposant un programme de découpe permettant de déterminer de manière semi-automatique ou automatique l'ordre de découpe. Le comportement de ce programme de découpe par rapport à une topographie donnée d'une panoplie est défini par des paramètres scalaires qui permettent de reproduire le comportement des préparateurs expérimentés.

A cet effet, la présente invention a donc pour objet un procédé de découpe d'une panoplie de pièces, la découpe étant réalisée par un outil de découpe dans un empilement de plaques maintenu par une ligne de bridage sur au moins un de ses côtés, le déplacement de l'outil de découpe étant guidé par un système de commande. Selon l'invention, le procédé comprend
a) une étape de production des données relatives à des points définissant le contour de chaque pièce et le positionnement de chaque pièce dans un repère cartésien (X, Y) de la panoplie,
b) une première étape de regroupement des pièces dans au moins un sous-ensemble, chaque sous-ensemble matérialisé par un cadre étant considéré comme une seule pièce ;
c) une deuxième étape de regroupement desdits sous-ensembles dans au moins un ensemble, chaque ensemble matérialisé par un cadre étant considéré comme une seule pièce ;
d) une étape d'établissement d'un ordre de progression de découpe des pièces à partir des sous-ensembles et des ensembles définis respectivement dans lesdites étapes (b) et (c) ;
e) une étape de découpe dans laquelle l'outil de découpe se déplace de pièce en pièce conformément audit ordre de progression de découpe établi dans l'étape (d).

Dans différents modes de réalisation possibles, la présente invention concerne également les caractéristiques qui ressortiront au cours de la description qui va suivre et qui devront être considérées isolément ou selon toutes leurs combinaisons techniques possibles :
- de préférence, dans l'étape (b), chaque sous-ensemble est défini à partir d'une pièce principale définissant une zone de recouvrement, les pièces se trouvant dans ladite zone de recouvrement selon un taux de recouvrement β faisant parties dudit sous-ensemble,
- de préférence, dans l'étape (c), chaque ensemble est défini à partir d'un sous-ensemble principal définissant une zone de projection, les sous-ensembles se trouvant dans ladite zone de projection selon un taux de superposition super-β faisant parties dudit ensemble.
   l'étape de regroupement de pièces dans des sous-ensembles comprend
- une première phase d'identification de ladite au moins une pièce principale,
- pour chaque pièce principale, une zone de recouvrement étant définie selon une direction d'éclairage,
- une deuxième phase d'identification des pièces se trouvant dans ladite zone de recouvrement selon un taux de recouvrement β compris entre 0 et 1.
   l'étape de regroupement des sous-ensembles dans des ensembles comprend
- une première phase d'identification dudit au moins un sous-ensemble principal,
- pour chaque sous-ensemble principal, une zone de projection étant définie sur l'un des deux axes du repère de ladite panoplie,
- une deuxième phase d'identification des sous-ensembles ayant une projection superposée avec ladite zone de projection selon un taux de superposition sucer-β compris entre 0 et 1.

L'invention sera décrite plus en détail en référence aux dessins annexés dans lesquels :
- la figure 1 représente schématiquement une panoplie de pièces imbriquées les unes par rapport aux autres, le côté inférieur de la panoplie étant maintenue par une ligne de bridages et les autres côtés étant maintenus seulement au milieu et sur les coins, le positionnement des pièces étant repéré par rapport à un repère cartésien (X, Y) qui est celui de la panoplie ;
- la figure 2 représente une pièce ayant un contour en forme de rectangle et une pièce ayant un contour en forme d'arc, chaque pièce étant entourée d'un cadre défini par quatre points P1, P2, P3 et P4 ;
- la figure 3 représente schématiquement une zone de recouvrement défini pour une pièce principale rectangle ;
- la figure 4 représente schématiquement une zone de recouvrement défini pour une pièce principale arc ;
- la figure 5 représente un exemple de panoplie de pièces comportant 4 sous-ensembles ;
- la figure 6 illustre un exemple de zone superposition entre deux sous-ensembles schématisés par deux rectangles, le regroupement des deux sous-ensembles forme un ensemble ;
- la figure 7 représente schématiquement pour un exemple de panoplie de pièces d'une part une configuration de découpe par colonnes lorsque super-β est égal à 1 (figure 7.A) et d'autre part une configuration de découpe par couches lorsque super- β égal à 0 (figure 7.B) ;
- la figure 8 représente un exemple de panoplie de pièces considéré comme un seul ensemble, les pièces étant découpées par couches simples et couches doubles :

- la figure 9 représente un exemple de pièces allongées disposées verticalement sur la panoplie ;
- la figure 10 représente un exemple de panoplie comprenant un ensemble vertical et trois sous-ensembles rectangles.

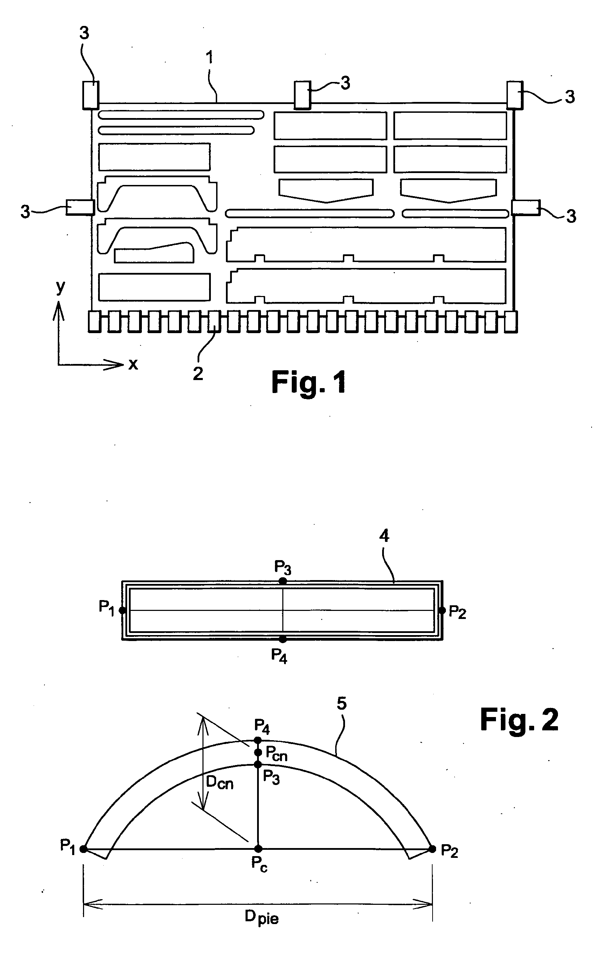

La figure 1 représente un exemple de panoplie 1 de pièces de différentes formes et de tailles à l'issue du processus de l'imbrication. Chaque pièce est repérée par sa position dans un repère cartésien (X, Y) qui est le repère de la panoplie dont l'origine est prise par le coin bas gauche de la panoplie. L'axe X est pris par le côté le plus grand du format de la panoplie. Pendant le processus de la découpe, la plaque ou l'empilement de plaques dans lequel est réalisée la découpe de pièces est maintenue d'une part par une ligne de bridages 2 sur son côté inférieur et d'autre part par des bras de bridage 3 au milieu et sur les deux coins des autres côtés.

Dans tous les exemples présentés ici, la détermination de l'ordre de découpe est soumise aux règles de découpe suivantes, ces règles sont des règles empiriques et dépendantes du procédé et du maintien de la plaque :
- la découpe doit finir dans une zone où il reste maximum de matière de plaque,
- la dernière face découpée doit être maintenue et ne pas être orientée côté squelette, côté où des pièces sont préalablement découpées,
- les départs et les fins de découpe doivent se situer de préférence sur les petites extrémités des pièces, l'endroit où les fragments sont les moins gênants, dans les exemples présentés ici, le départ de la découpe d'une pièce est le coin bas gauche de la pièce,
- la progression de la découpe est orientée selon l'axe X dans le sens des X décroissants,
- la découpe de la panoplie doit finir côté ligne de bridages, par conséquent dans la configuration de la panoplie présentée ici, la progression de découpe est dans le sens des Y décroissants,
- la découpe se fait dans un sens tel que le côté pièce est découpée en avalant.

L'objectif de l'invention est de reproduire les principes utilisés par les préparateurs qui définissent l'ordre de découpe par expérience en tenant compte des règles de découpe pour déterminer de manière automatique l'ordre optimal de découpe des pièces. Le principe du procédé est basé sur des paramètres de pondérations qui se rapportent tous à un paramètre physique en terme de géométrie sur la panoplie, ces paramètres étant réglables selon le type de topographie de la panoplie.

Ces paramètres de pondérations sont destinés pour effectuer un traitement successif de regroupement des pièces en sous-ensembles et en ensembles. L'ordre de découpe est déterminé ensuite à partir de ces sous-ensembles et de ces ensembles.

Avantageusement, l'étape de regroupement des pièces dans des sous-ensembles et l'étape de regroupement des sous-ensembles en ensembles font parties d'un processus d'itérations qui permettent de discrétiser la topographie de la panoplie à plusieurs niveaux. L'étape de regroupement de pièces en sous-ensembles et l'étape de regroupement des sous-ensembles en ensembles sont les deux premiers niveaux du processus d'itérations.

Une première étape du procédé consiste de produire des données relatives à des points définissant le contour de chaque pièce et le positionnement de chaque pièce dans le repère cartésien (X,Y) de la panoplie,

Cette étape permet d'établir la topographie de la panoplie d'une part en analysant le profil du contour de chaque pièce constituant la panoplie et d'autre part de les repérer par leur positionnement dans le repère global de panoplie (X, Y).

Ces données comprennent les coordonnées des points définissant le contour de chaque pièce dans le repère cartésien (X, Y) de la panoplie.

A partir de ces coordonnées, on définit deux catégories de forme de contour pour les pièces, des pièces ayant un contour en forme de rectangle 4, et des pièces ayant un contour en forme d'arc 5 (Figure 2).

Chaque pièce est généralement définie par quatre points P1, P2, P3 et P4.
La panoplie est entièrement définie par les coordonnées de ces quatre points de toutes les pièces.

La figure 2 présente les deux formes de contour des pièces, une première pièce référencée 4 ayant une forme rectangle et une deuxième pièce référencée 5 ayant une forme arc. Dans le cas de la pièce 4, les quatre points P1, P2, P3 et P4 sont les milieux des 4 côtés du rectangle. L'ordre de numérotation doit satisfaire la condition telle que le point P1 soit le point le plus proche de l'origine du repère de panoplie et on passe de P1 à P3 en allant de P1 vers P2 et en tournant autour de la pièce dans le sens horaire. Dans le cas de la pièce 5 et de manière générale pour une pièce de forme quelconque, les points P1 et P2 sont les deux points les plus éloignés entre eux situés sur le contour de la pièce, les points P3 et P4 sont les intersections d'une droite qui coupe perpendiculairement le segment [P1, P2] en son milieu avec le contour de la pièce. Pour la suite de la description, les pièces sont désignées par pièce rectangle ou pièce arc selon la forme de leur contour.

Deux règles sont nécessaires pour différencier les pièces rectangles des pièces arc. La première règle est la position des points P3 et P4 par rapport à la droite (P1, P2). Une pièce est définie comme une pièce rectangle lorsque les points P3 et P4 sont situés de part et d'autre de la droite (P1, P2). La deuxième règle qui permet de définir la forme du contour de la pièce est le paramètre de concavité γ. La concavité d'une pièce est déterminée de la manière suivante, les 4 points P1, P2, P3 et P4 sont utilisés pour déterminer les points Pcn et Pc qui sont respectivement le milieu du segment [P3, P4] et le milieu du segment [P1, P2] (figure 2). Une pièce est considérée arc si elle vérifie d'une part la première règle et d'autre part la relation suivante : γD_{Pie} ≤ D_{CN}, D_{Pie} étant la distance entre les points P1 et P2. Le paramètre γ est un paramètre à fixer et sa valeur est compris entre 0 et 1.

Selon le procédé de l'invention, la deuxième étape consiste de regrouper les pièces dans des sous-ensembles.

Cette étape de regroupement des pièces en sous-ensembles comporte deux phases, une première phase d'identification des pièces principales à partir desquelles on définit pour chacune une zone de recouvrement et une deuxième phase d'identification de chaque pièce se trouvant dans cette zone de recouvrement selon un paramètre de pondération qui est un taux de recouvrement β.

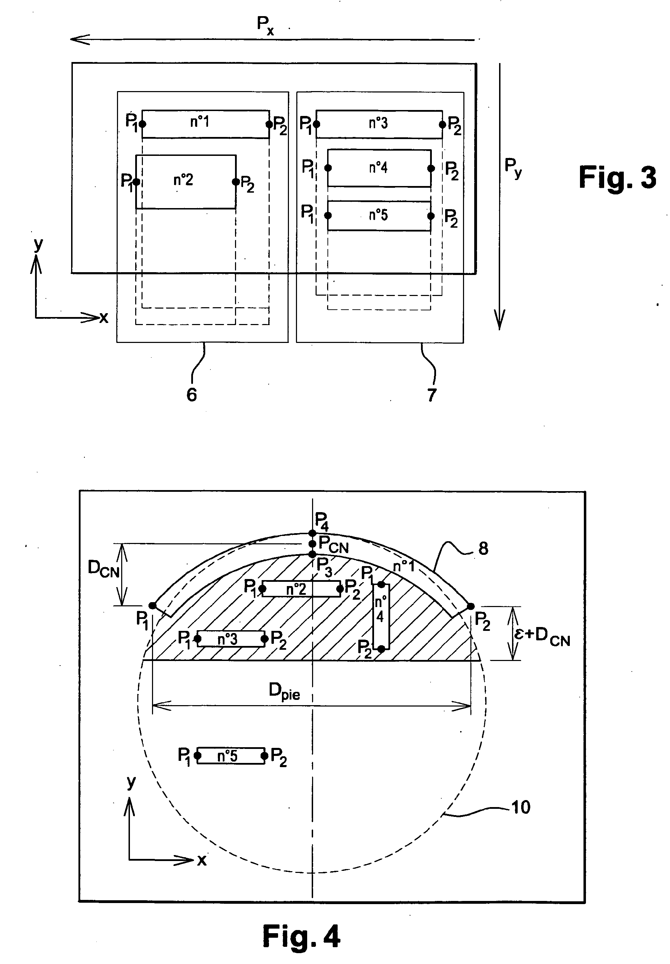

La zone de recouvrement peut être assimilée à une zone d'ombre portée selon une direction d'éclairage donnée. Tous les sous-ensembles sont construits en considérant une direction d'éclairage selon un axe perpendiculaire à l'axe de progression global de la découpe. Dans tous les exemples présentés ici, la progression générale de pièce en pièce est définie selon l'axe X, correspondant au grand côté de la plaque (figure 3). Par conséquent les sous-ensembles sont construits selon une direction d'éclairage orientée selon l'axe Y. La figure 3 illustre ce principe, les sous-ensembles sont.découpés selon une progression Px, ici dans le sens décroissant des X. Les pièces appartenant à chacun des ensembles sont découpées selon une direction Py, dans le sens décroissant des Y également.

La pièce principe est définie selon deux critères :
- la pièce principale doit être la plus grande possible en longueur selon l'axe X de manière à définir la zone de recouvrement la plus grande possible pour regrouper maximum de pièces,
- la pièce principale est toujours au-dessus des autres pièces dans le sous-ensemble dans le sens des Y décroissants, c'est la pièce dont la coordonnée Y dans le repère de la panoplie, ainsi la zone de recouvrement est définie du haut vers le bas dans la panoplie.

Dans le cas où la pièce principale est une pièce rectangle, la zone de recouvrement est définie selon les règles suivantes : les points issus de la projection du segment [P1, P2] des pièces appartenant à l'ensemble défini par la pièce rectangle et les points issus de la projection du segment [P1, P2] de la pièce principale sont confondus avec un taux de recouvrement β. Le paramètre β est compris entre 0 et 1 et il est le même pour tous les sous-ensembles d'une même panoplie.

La figure 3 illustre le cas de deux sous-ensembles rectangles à travers deux exemples avec un taux de recouvrement β fixé à 0.65. Le premier sous-ensemble référencé 6 comporte deux pièces rectangles numérotées 1 et 2. La pièce n°1 est identifiée comme étant la pièce principale. La pièce n°2 est située au-dessous de la pièce principale. Les points de la projection de son segment [P1, P2] sur l'axe X et ceux de la pièce principale sont confondus à plus de 65%. La pièce n°2 et la pièce n°1 forment un sous-ensemble. Le deuxième exemple de sous-ensemble rectangle comporte trois pièces numérotées 3 à 5, la pièce principale est la pièce n°3 et les deux autres pièces rectangles n°4 et n°5 sont identifiées comme des pièces à l'intérieur de la zone de recouvrement définie par la pièce n°3. Dans cet exemple, Tous les points issus de la projection du segment [P1, P2] des deux pièces n°4 et n°5 sont confondus à 100% avec ceux de la pièce principale.

La figure 4 illustre le cas d'un sous-ensemble arc référencé 8 où la pièce n° 1 est une pièce principale arc. La zone de recouvrement définie à partir de cette pièce est limitée tout d'abord par une première ligne 9 qui sépare la zone de recouvrement de la zone extérieure. Cette ligne est tracée parallèlement à la ligne passant par les deux points P1, P2 de la pièce principale arc et placée à une distance de ε×D_{CN} par rapport à la droite (P1, P2), D_{CN} étant la concavité de la pièce définie précédemment et ε est un facteur qui permet de varier la superficie de la zone de recouvrement en faisant varier la distance ε×D_{CN}.

Cette zone de recouvrement est également limitée par le cercle 10 qui passe par les points P1, P4 et P2, ayant pour centre O et rayon R qui est la distance entre O et P4 de la pièce arc.

En combinant les deux limites, la zone de recouvrement pour les pièces est la surface limitée entre le cercle 10 de centre O et de rayon R, la ligne 9 et la pièce arc n°1, cette zone est hachurée sur la figure 4.

Les pièces n°2, n°3 et n°4 se trouvent dans cette surface hachurée appartiennent donc au sous-ensemble formé par la pièce arc. La pièce n°5 est en dehors de cette zone de recouvrement, elle ne fait pas partie du sous-ensemble.

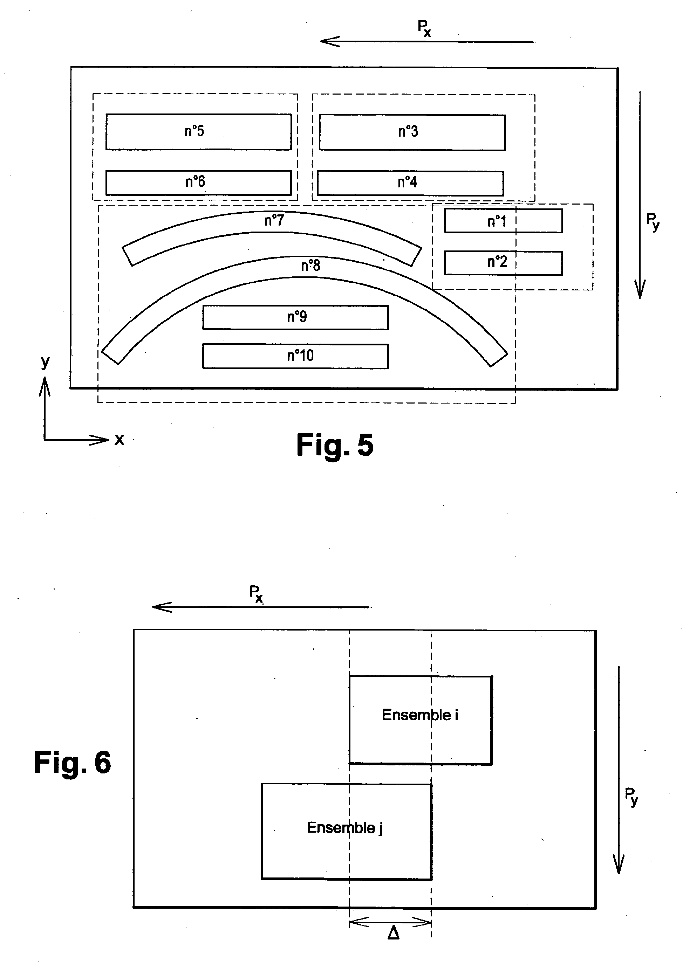

La figure 5 représente un exemple de quatre sous-ensembles, le premier sous-ensemble étant constitué de pièces n°1 et n°2. Les pièces n°3 et n °4 constituent le deuxième sous-ensemble et les pièces n° 5 et n°6 le quatrième sous-ensemble. Le dernier sous-ensemble est constitué de quatre pièces numérotées de 7 à 10 dont la pièce principale est n° 7. Chaque sous-ensemble est matérialisé par un cadre, le sous-ensemble formé est considéré comme une seule pièce.

Cette première étape de regroupement a permis de simplifier la topographie de la panoplie et constitue un premier niveau de discrétisation de la topographie de la panoplie.

Après l'étape de regroupement de toutes les pièces en sous-ensembles, la deuxième étape consiste de regrouper les sous-ensembles considérés comme des pièces dans des ensembles. La figure 6 représente deux sous-ensembles i et j, le sous-ensemble i étant le sous-ensemble principal, le sous-ensemble j appartient au sous-ensemble i si sa projection sur l'axe X est superposée avec celle du sous-ensemble i selon un taux de superposition super-β, c'est-à-dire le rapport de la zone confondue Δ sur la longueur du cadre entourant l'ensemble j est supérieure ou égale à super-β. Le paramètre super-β est compris entre 0 et 1.

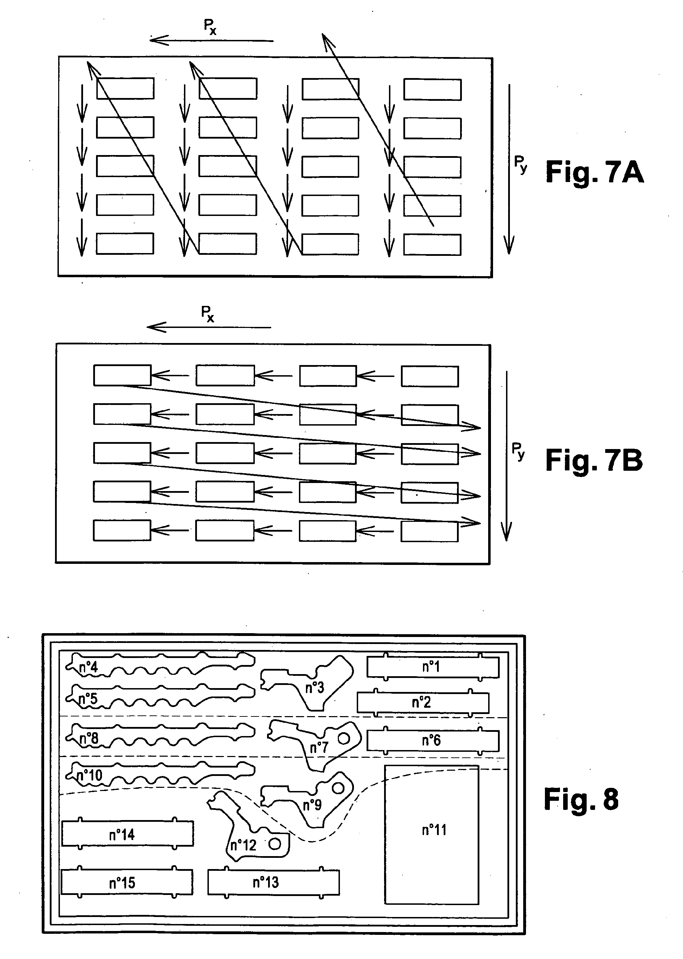

Lorsque ce paramètre super-β est égal à 1, la panoplie est constituée uniquement de sous-ensembles. L'ordre de découpe optimal est déterminé par des sous-ensembles. Ce cas est illustré sur la figure 7.A où les pièces sont regroupées en sous-ensembles par colonnes. L'ordre de découpe des pièces dans ce cas est défini d'abord par l'ordre de progression de découpe de colonne en colonne dans le sen des X décroissants. Dans chaque colonne, les pièces sont découpées l'une après l'autre dans le sens des Y décroissants. Ces sens de progressions sont représentés par des flèches sur la figure 7.A.

Lorsque ce paramètre super-β est égal à 1, toute la panoplie est considérée comme un seul ensemble, ce deuxième cas extrême est illustré par la figure 7.B où les pièces sont découpées par couches, les flèches indiquant le sens de la progression de découpe.

Avantageusement ce paramètre super-β est un paramètre de pondération qui permet de reproduire le comportement d'une découpe par couches ou par colonnes, ou une combinaison des deux modes de progressions qui déterminent l'ordre de découpe d'une panoplie.

De manière générale la valeur du paramètre super-β est choisie en fonction de la géométrie des pièces, de leur agencement les une par rapport aux autres sur la panoplie et également des règles de découpe qui dépendent du type de procédé de découpe et du mode de maintien de la plaque ou de l'empilement de plaques.

De manière générale, les couches sont des couches simples, ne contenant qu'une seule ligne de pièces tel que le cas de la figure 7.B. Dans un autre mode de réalisation de l'invention, la couche peut être une couche double qui contient deux lignes de pièces lorsque celles-ci sont très proches l'une par rapport à l'autre. Ce cas est illustré sur la figure 8 où toute la panoplie est considérée comme un seul ensemble, le paramètre super-β étant égal à 0 dans ce cas. Cet ensemble comporte quatre couches, la première couche est constituée par les pièces n ° 1, 2, 3, 4, 5, la deuxième couche par les pièces n ° 6, 7, et 8, la troisième couche par les pièces n ° 9 et 10, et enfin la dernière couche par les pièces n° 11, 12, 13, 14, et 15. Dans la première couche, les pièces n° 2 et 5 se trouvant respectivement au-dessus des pièces 1 et 4 constituent une deuxième ligne de pièces au sein de la première couche. Dans la dernière couche, les pièces n° 13 et 15 constituent une deuxième ligne de pièces par rapport à la ligne de pièces n° 12 et 14. La première couche et la dernière couche sont des couches doubles.

Le procédé de découpe comporte une étape supplémentaire qui consiste à identifier des pièces allongées disposées généralement verticalement sur la panoplie selon l'axe Y. Une pièce est identifiée verticale lorsque ses points P1 et P2 sont disposés verticalement sur la panoplie et que la projection sur l'axe Y du segment [P1, P2] doit être au moins deux fois plus grande que celle du segment [P3, P4] sur l'axe X. Ces pièces identifiées comme des pièces verticales ne peuvent pas appartenir à un sous-ensemble, chacune constitue un sous-ensemble vertical et les sous-ensembles verticaux sont regroupés dans un ensemble vertical.

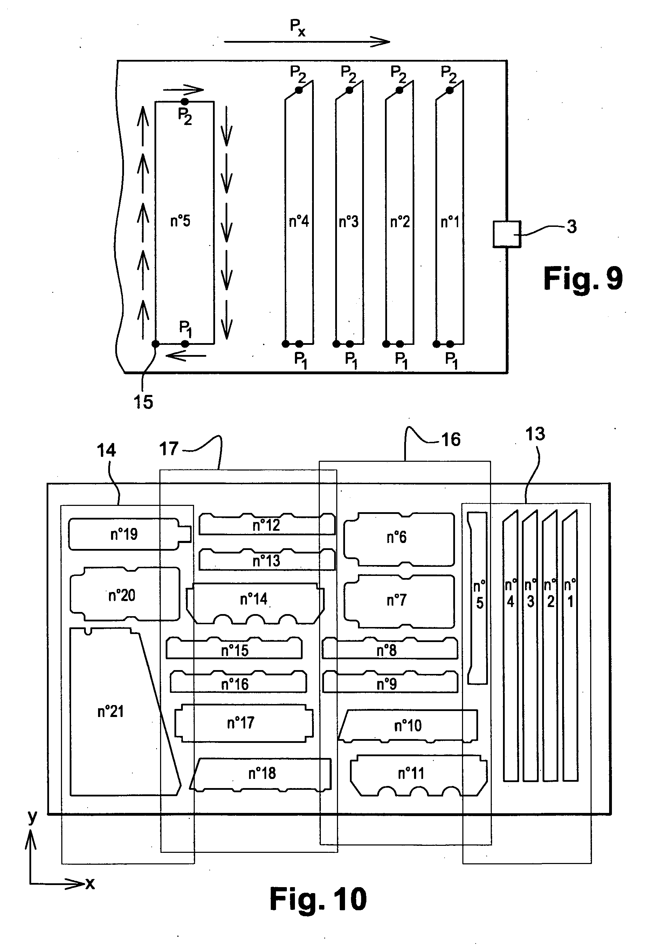

La figure 9 illustre un ensemble vertical disposé à l'extrême droite de la panoplie.

Selon l'invention, la progression de la découpe Px dans un ensemble vertical est orientée dans un sens des X croissants dans le repère de la panoplie. Ce sens particulier par rapport au sens de progression dans un ensemble non vertical est dû aux règles de découpe selon lesquelles la découpe d'une pièce termine toujours par le côté maintenu par un maximum de matière des pièces non découpées, le dernier côté à découper ne doit pas être orienté vers le côté squelette, côté comportant des trous laissées par les autres pièces découpées préalablement. Si nous procédons à une découpe dans le sens des X décroissants dans un ensemble vertical, en prenant compte que l'outil de découpe commence la découpe d'une pièce toujours par le coin bas gauche de chaque pièce verticale 15, le dernier côté de la dernière pièce à découper étant la pièce n ° 5 sur la figure 9 est orienté alors vers le côté squelette. Si le sens de découpe est inversé dans cet ensemble vertical, alors le dernier côté de la dernière pièce verticale à découper étant la pièce n° 1 se trouve du côté maintenu par un bras de bridage 3.

Par conséquent et de manière général, un ensemble vertical qui est disposé à l'extrême droite de la panoplie est toujours découpé en premier, de même lorsqu'il est disposé à l'extrême gauche de la panoplie.

La figure 10 présente un exemple de panoplie de pièces numérotées de 1 à 21 qui illustrent toutes les étapes de regroupement du procédé de l'invention.

Dans une première étape, on fixe le taux de recouvrement β égal à 0.65, la panoplie comporte alors 3 sous-ensembles et cinq sous-ensembles verticaux contenant chacun une seule pièce verticale n°1 à n°5, le premier sous-ensemble référencé 16 comporte les pièces n°6 à 11, le deuxième ensemble référencé 17 les pièces n°12 à n°18, le troisième référencé 14 les pièces n°19 à 21.

Dans une deuxième étape du procédé, les trois sous-ensembles sont regroupés pour former un ensemble et les cinq sous-ensembles verticaux en un ensemble vertical référencé 13 sur la figure 10.

L'ordre de découpe dépend donc de la valeur du paramètre super-β. Les deux cas extrêmes sont les cas où super-β est égal à 0 et à 1.

Dans un premier cas, si le paramètre super-β est choisi égal à 0, toute la panoplie est considérée comme un seul ensemble, l'ordre de découpe de la panoplie est le suivant :
- l'ensemble vertical est découpé en premier et dans le sens des X croissant, c'est-à-dire dans l'ordre des pièces verticales n° 5 à 1,
- puis dans l'ensemble, les pièces sont découpées par couches.

Dans un deuxième cas, le paramètre super-β est égal à 1, l'ordre de découpe de la panoplie est défini à partir seulement des sous-ensembles organisés en colonnes et des cinq sous-ensembles verticaux :
- les pièces verticales sont découpées en premier, dans l'ordre des numéros 5 à 1,
- l'ordre de découpe commence par la première colonne de pièces qui est le sous-ensemble 16, puis la deuxième colonne correspondant au sous-ensemble 17 et la troisième colonne correspondant au sous-ensemble 14, dans chaque colonne, les pièces sont découpées du haut vers le bas, dans le sens des Y décroissants, conformément à la règle de découpe qui indique que la découpe doit toujours finir côté ligne de bridages.

Avantageusement ce procédé de découpe est intégré dans un programme de découpe via un algorithme. Un processeur utilise ce programme de découpe pour déterminer automatiquement l'ordre de découpe selon les données d'une panoplie, l'ordre obtenu est transmis au système de commande pour guider l'avancement de l'outil de découpe. Le sens de la progression de découpe dans les X décroissants est indiqué manuellement par un opérateur au début du procédé de découpe.

Le processus d'itérations est semi-automatique, le nombre d'itérations est donné par l'opérateur qui juge si le niveau de discrétisations de la panoplie est suffisant pour produire un ordre de découpe, la fin du processus est donc indiquée par l'opérateur.

Dans un autre mode de réalisation, la valeur des paramètres de pondération peut être définie partiellement par le préparateur, la détermination de l'ordre de découpe est alors dans un mode semi-automatique. Ce mode semi-automatique peut être utile pour définir les paramètres par des observations directes de la panoplie avant de les figer pour un fonctionnement en mode automatique.

De manière générale, le procédé de découpe utilisé est un procédé de découpe par fraisage à grande vitesse et les plaques sont en configuration de maintien minimum.

## Revendications

1. Procédé de découpe d'une panoplie (1) de pièces, ladite découpe étant réalisée par un outil de découpe dans une plaque ou un empilement de plaques maintenu par une ligne de bridage (2) sur au moins un des côtés de ladite plaque ou dudit empilement de plaques, le déplacement dudit outil de découpe étant guidé par un système de commande, **caractérisé en ce que** ledit procédé comprend
a) une étape de production des données relatives à des points définissant le contour de chaque pièce et le positionnement de chaque pièce dans un repère cartésien (X,Y) de la panoplie,
b) une première étape de regroupement des pièces dans au moins un sous-ensemble, chaque sous-ensemble matérialisé par un cadre étant considéré comme une seule pièce ;
c) une deuxième étape de regroupement desdits sous-ensembles dans au moins un ensemble, chaque ensemble matérialisé par un cadre étant considéré comme une seule pièce ;
d) une étape d'établissement d'un ordre de progression de découpe des pièces à partir des sous-ensembles et des ensembles définis respectivement dans lesdites étapes (b) et (c) ;
e) une étape de découpe dans laquelle l'outil de découpe se déplace de pièce en pièce conformément audit ordre de progression de découpe établi dans l'étape (d).

2. Procédé de découpe selon la revendication 1, **caractérisé en ce que** dans l'étape (b), chaque sous-ensemble est défini à partir d'une pièce principale définissant une zone de recouvrement, les pièces se trouvant dans ladite zone de recouvrement selon un taux de recouvrement β faisant parties dudit sous-ensemble, et **en ce que** dans l'étape (c), chaque ensemble est défini à partir d'un sous-ensemble principal définissant une zone de projection, les sous-ensembles se trouvant dans ladite zone de projection selon un taux de superposition super-β faisant parties dudit ensemble.

3. Procédé de découpe selon les revendications 1 à 2, **caractérisé en ce que** ladite première étape de regroupement (b) et ladite deuxième étape de regroupement (c) font parties d'un processus d'itérations semi-automatique, l'étape (a) et l'étape (b) étant les deux premières itérations dudit processus.

4. Procédé de découpe les revendications 1 à 3, **caractérisé en ce que** lesdites données relatives à des points définissant le contour de chaque pièce comprennent les coordonnées de chaque point dans ledit repère cartésien (X, Y) de la panoplie.

5. Procédé de découpe selon les revendications 1 à 4, **caractérisé en ce que** la forme du contour de chaque pièce est déterminée par un paramètre de concavité γ compris entre 0 et 1, ledit paramètre permettant de déterminer si le contour d'une pièce est en forme de rectangle (4) ou d'arc (5).

6. Procédé de découpe selon les revendications 1 à 5, **caractérisé en ce que** ladite étape de regroupement des pièces dans des sous-ensembles (b) comprend
- une première phase d'identification de ladite au moins une pièce principale,
- pour chaque pièce principale, une zone de recouvrement étant définie selon une direction d'éclairage,
- une deuxième phase d'identification des pièces se trouvant dans ladite zone de recouvrement selon un taux de recouvrement β compris entre 0 et 1.

7. Procédé de découpe selon la revendication 6, **caractérisé en ce que** ladite direction d'éclairage est définie selon un axe perpendiculaire à l'axe de progression de découpe.

8. Procédé de découpe selon la revendication 7, **caractérisé en ce que** la progression de découpe étant orientée selon l'axe X, ladite direction d'éclairage de la zone de recouvrement est orientée selon l'axe Y.

9. Procédé de découpe selon l'une quelconque des revendications 6 à 8, **caractérisé en ce que** ladite pièce principale est la pièce la plus grande en longueur selon l'axe X, de manière à construire la zone de recouvrement la plus grande.

10. Procédé de découpe selon la revendication 9, **caractérisé en ce que** pour les pièces ayant les mêmes longueurs, la pièce principale est la pièce ayant la coordonnée Y la plus grande dans le repère de ladite panoplie.

11. Procédé de découpe selon les revendications 1 à 10, **caractérisé en ce que** ladite étape de regroupement des sous-ensembles dans des ensembles (c) comprend
- une première phase d'identification dudit au moins un sous-ensemble principal,
- pour chaque sous-ensemble principal, une zone de projection étant définie sur l'un des deux axes du repère de ladite panoplie,
- une deuxième phase d'identification des sous-ensembles ayant une projection superposée avec ladite zone de projection selon un taux de superposition super-β compris entre 0 et 1.

12. Procédé de découpe selon la revendication 11, **caractérisé en ce que** super-β étant égal à 1, l'ordre de découpe de ladite panoplie est défini uniquement par des pièces regroupées en sous-ensembles.

13. Procédé de découpe selon la revendication 11, **caractérisé en ce que** super-β étant égal à 0, ladite panoplie étant considérée comme un seul ensemble, l'ordre de découpe de ladite panoplie est défini par des pièces organisées en couches.

14. Procédé de découpe selon la revendication 13, **caractérisé en ce que** ladite couche comprend une couche simple.

15. Procédé de découpe selon la revendication 13, **caractérisé en ce que** ladite couche comprend une couche double.

16. procédé de découpe selon l'une quelconque des revendications 1 à 15,
**caractérisé en ce que** ladite progression de découpe est orientée selon un sens des X décroissants

17. Procédé de découpe selon la revendication 1, **caractérisé en ce que** ledit procédé de découpe comporte une étape supplémentaire dans laquelle on identifie des pièces allongées disposées verticalement selon l'axe Y dans ledit repère de la panoplie, lesdites pièces étant regroupées dans un ensemble vertical.

18. Procédé de découpe selon la revendication 17, **caractérisé en ce que** dans ledit ensemble vertical, ladite progression de découpe est orientée selon un sens des X croissants.

19. Dispositif de découpe **caractérisé en ce qu'**il comporte un système de commande pour guider ledit outil de découpe, ledit système comprenant un programme de découpe dans lequel est intégré ledit procédé de découpe selon l'une quelconque des revendications précédentes.

## Claims

1. A method of cutting a set (1) of parts, said cutting being performed by a cutting tool in a plate or stack of plates held by a clamping line (2) on at least one of the sides of said plate or of said stack of plates, the movement of said cutting tool being guided by a control system, **characterised in that** said method comprises
a) a step of producing data relating to points defining the contour of each part and the positioning of each part in a cartesien reference frame (X,Y) of the set,
b) a first step of grouping the parts in at least one subassembly, each subassembly represented by a frame being considered to be a single part;
c) a second step of grouping said subassemblies in at least one assembly, each assembly represented by a frame being considered to be a single part;
d) a step of establishing an order of progression of cutting of the parts from the subassemblies and the assemblies defined respectively in said steps (b) and (c);
e) a cutting step in which the cutting tool moves from part to part in accordance with said order of cutting progression established in step (d).

2. A cutting method according to claim 1, **characterised in that**, in step (b), each subassembly is defined from a main part defining an overlap zone, the parts situated in said overlap zone according to an overlap ratio β forming parts of said subassembly, and **in that**, in step (c), each assembly is defined from a main subassembly defining a projection zone, the subassemblies situated in said projection zone according to a superimposition ratio super-β forming parts of said assembly.

3. A cutting method according to claims 1 to 2, **characterised in that** said first grouping step (b) and said second grouping step (c) form parts of a semi-automatic iteration process, step (a) and step (b) being the first two iterations of said process.

4. A cutting method according to claims 1 to 3, **characterised in that** said data relating to points defining the contour of each part comprise the coordinates of each point in said cartesien reference frame (X,Y) of the set.

5. A cutting method according to claims 1 to 4, **characterised in that** the form of the contour of each part is determined by a concavity parameter γ lying between 0 and 1, said parameter making it possible to determine whether the contour of a part is in the form of a rectangle (4) or an arc (5).

6. A cutting method according to claims 1 to 5, **characterised in that** said step of grouping the parts in subassemblies (b) comprises
- a first phase of identifying said at least one main part,
- for each main part, an overlap zone being defined according to an illumination direction,
- a second phase of identifying the parts situated in said overlap zone according to an overlap ratio β of between 0 and 1.

7. A cutting method according to claim 6, **characterised in that** said illumination direction is defined along an axis perpendicular to the cutting progression axis.

8. A cutting method according to claim 7, **characterised in that**, the cutting progression being oriented along the X axis, said direction of illumination of the overlap zone is oriented along the Y axis.

9. A cutting method according to any one of claims 6 to 8, **characterised in that** said main part is the part greatest in length along the X axis, so as to construct the largest overlap zone.

10. A cutting method according to claim 9, **characterised in that**, for the parts having the same lengths, the main part is the part having the largest Y coordinate in the reference frame of said set.

11. A cutting method according to claims 1 to 10, **characterised in that** said step of grouping the subassemblies in assemblies (c) comprises
- a first phase of identifying said at least one main subassembly,
- for each main subassembly, a projection zone being defined on one of the two axes of the reference frame of said set,
- a second phase of identifying the subassemblies having a projection superimposed with said projection zone at a superimposition ratio super-β of between 0 and 1.

12. A cutting method according to claim 11, **characterised in that**, super-β being equal to 1, the order of cutting of said set is defined solely by parts grouped in subassemblies.

13. A cutting method according to claim 11, **characterised in that**, super-β being equal to 0, said set being considered as a single assembly, the order of cutting of said set is defined by parts organised in layers.

14. A cutting method according to claim 13, **characterised in that** said layer comprises a single layer.

15. A cutting method according to claim 13, **characterised in that** said layer comprises a double layer.

16. A cutting method according to any one of claims 1 to 15, **characterised in that** said cutting progression is oriented in a direction of decreasing Xs.

17. A cutting method according to claim 1, **characterised in that** said cutting method comprises an additional step in which elongate parts disposed vertically along the Y axis in said reference frame of the set are identified, said parts being grouped in a vertical assembly.

18. A cutting method according to claim 17, **characterised in that**, in said vertical assembly, said cutting progression is oriented in a direction of increasing Xs.

19. A cutting device **characterised in that** it comprises a control system for guiding said cutting tool, said system comprising a cutting program in which said cutting method according to any one of the preceding claims is integrated.

## Patentansprüche

1. Verfahren zum Ausschneiden einer Teilezusammenstellung (1), wobei das Ausschneiden durch ein Ausschneidewerkzeug in einer Platte oder in einem Stapel von Platten, die durch eine Einspannreihe (2) an wenigstens einer der Seiten der Platte oder des Stapels von Platten gehalten werden, ausgeführt wird, wobei die Verlagerung des Ausschneidewerkzeugs durch ein Steuersystem geführt wird, **dadurch gekennzeichnet, dass** das Verfahren umfasst:
a) einen Schritt des Erzeugens von Daten bezüglich Punkten, die den Umriss jedes Teils und die Positionierung jedes Teils in einem kartesischen Koordinatensystem (X, Y) der Zusammenstellung definieren,
b) einen ersten Schritt des Umgruppierens der Teile in wenigstens einer Untereinheit, wobei jede Untereinheit durch einen Rahmen verwirklicht ist, der als ein einziges Teil angesehen wird;
c) einen zweiten Schritt des Umgruppierens der Untereinheiten in wenigstens einer Einheit, wobei jede Einheit durch einen Rahmen verwirklicht ist, der als ein einziges Teil angesehen wird;
d) einen Schritt des Herstellens einer Fortschrittsreihenfolge des Ausschneidens der Teile ausgehend von den Untereinheiten und den Einheiten, die in den Schritten (b) bzw. (c) definiert werden;
e) einen Ausschneideschritt, in dem sich das Ausschneidewerkzeug von einem Teil zum Nächsten in Übereinstimmung mit der Fortschrittsreihenfolge des Ausschneidens, die in dem Schritt (d) festgelegt wird, verlagert.

2. Ausschneideverfahren nach Anspruch 1, **dadurch gekennzeichnet, dass** im Schritt (b) jede Untereinheit ausgehend von einem Hauptteil definiert wird, das eine Abdeckungszone definiert, wobei die Teile, die sich mit einem Abdeckungsanteil β in der Abdeckungszone befinden, zu der Untereinheit gehören, und dass im Schritt (c) jede Einheit ausgehend von einer Haupt-Untereinheit definiert wird, die eine Projektionszone definiert, wobei die Untereinheiten, die sich mit einem Überlagerungsanteil Über-β in der Projektionszone befinden, zu der Einheit gehören.

3. Ausschneideverfahren nach den Ansprüchen 1 bis 2, **dadurch gekennzeichnet, dass** der erste Umgruppierungsschritt (b) und der zweite Umgruppierungsschritt (c) zu einem halbautomatischen Iterationsprozess gehören, wobei der Schritt (a) und der Schritt (b) die zwei ersten Iterationen des Prozesses sind.

4. Ausschneideverfahren nach den Ansprüchen 1 bis 3, **dadurch gekennzeichnet, dass** die Daten bezüglich der Punkte, die den Umriss jedes Teils definieren, die Koordinaten jedes Punkts in dem kartesischen Koordinatensystem (X, Y) der Zusammenstellung enthalten.

5. Ausschneideverfahren nach den Ansprüchen 1 bis 4, **dadurch gekennzeichnet, dass** die Form des Umrisses jedes Teils durch einen Konkavitätsparameter γ im Bereich von 0 bis 1 bestimmt ist, wobei der Parameter zu bestimmen ermöglicht, ob der Umriss eines Teils eine rechtwinklige Form (4) oder eine Bogenform (5) ist.

6. Ausschneideverfahren nach den Ansprüchen 1 bis 5, **dadurch gekennzeichnet, dass** der Schritt des Umgruppierens der Teile in den Untereinheiten (b) umfasst:
- eine erste Phase zum Identifizieren des wenigstens einen Hauptteils,
- wobei für jedes Hauptteil eine Abdeckungszone in Beleuchtungsrichtung definiert wird,
- eine zweite Phase zum Identifizieren von Teilen, die sich in der Abdeckungszone mit einem Abdeckungsanteil β im Bereich von 0 bis 1 befinden.

7. Ausschneideverfahren nach Anspruch 6, **dadurch gekennzeichnet, dass** die Beleuchtungsrichtung längs einer Achse senkrecht zur Achse des Fortschritts des Ausschneidens definiert ist.

8. Ausschneideverfahren nach Anspruch 7, **dadurch gekennzeichnet, dass** dann, wenn der Ausschneidefortschritt längs der X-Achse orientiert ist, die Beleuchtungsrichtung der Abdeckungszone längs der Y-Achse orientiert ist.

9. Ausschneideverfahren nach einem der Ansprüche 6 bis 8, **dadurch gekennzeichnet, dass** das Hauptteil das Teil mit der größten Länge längs der X-Achse ist, derart, dass die größte Abdeckungszone konstruiert wird.

10. Ausschneideverfahren nach Anspruch 9, **dadurch gekennzeichnet, dass** für die Teile, die gleiche Längen haben, das Hauptteil jenes Teil ist, das die größte Y-Koordinate in dem Bezugssystem der Zusammenstellung hat.

11. Ausschneideverfahren nach den Ansprüchen 1 bis 10, **dadurch gekennzeichnet, dass** der Schritt zum Umgruppieren der Untereinheiten in den Einheiten (c) umfasst:
- eine erste Phase zum Identifizieren der wenigstens einen Haupt-Untereinheit,
- wobei für jede Haupt-Untereinheit eine Projektionszone längs einer der zwei Achsen des Bezugssystems der Zusammenstellung definiert ist,
- eine zweite Phase zum Identifizieren der Untereinheiten, die eine Projektion haben, die der Projektionszone mit einem Überlagerungsanteil Über-β im Bereich von 0 bis 1 überlagert ist, haben.

12. Ausschneideverfahren nach Anspruch 11, **dadurch gekennzeichnet, dass** dann, wenn Über-β gleich 1 ist, die Ausschneidereihenfolge der Zusammenstellung nur durch die in Untereinheiten umgruppierten Teile definiert ist.

13. Ausschneideverfahren nach Anspruch 11, **dadurch gekennzeichnet, dass** dann, wenn Über-β gleich 0 ist und die Zusammenstellung als eine einzige Einheit angesehen wird, die Reihenfolge des Ausschneidens der Zusammenstellung durch die in Schichten organisierten Teile definiert ist.

14. Ausschneideverfahren nach Anspruch 13, **dadurch gekennzeichnet, dass** die Schicht eine einfache Schicht umfasst.

15. Ausschneideverfahren nach Anspruch 13, **dadurch gekennzeichnet, dass** die Schicht eine doppelte Schicht umfasst.

16. Ausschneideverfahren nach einem der Ansprüche 1 bis 15, **dadurch gekennzeichnet, dass** der Ausschneidefortschritt in einer Richtung mit abnehmendem X orientiert ist.

17. Ausschneideverfahren nach Anspruch 1, **dadurch gekennzeichnet, dass** das Ausschneideverfahren einen zusätzlichen Schritt umfasst, in dem lang gestreckte Teile identifiziert werden, die vertikal längs der Y-Achse in dem Bezugssystem der Zusammenstellung angeordnet sind, wobei diese Teile in eine vertikale Einheit umgruppiert werden.

18. Ausschneideverfahren nach Anspruch 17, **dadurch gekennzeichnet, dass** in der vertikalen Einheit der Ausschneidefortschritt längs einer Richtung mit zunehmendem X orientiert ist.

19. Ausschneidevorrichtung, **dadurch gekennzeichnet, dass** sie ein Steuersystem umfasst, um das Ausschneidewerkzeug zu führen, wobei das System ein Ausschneideprogramm enthält, in das das Ausschneideverfahren nach einem der vorhergehenden Ansprüche integriert ist.
